(19) **Europäisches Patentamt**
**European Patent Office**
**Office européen des brevets**

(11) **EP 4 487 079 B1**

(12) **FASCICULE DE BREVET EUROPEEN**

(45) Date de publication et mention de la délivrance du brevet:
**29.04.2026 Bulletin 2026/18**

(21) Numéro de dépôt: **23711520.9**

(22) Date de dépôt: **27.02.2023**

(51) Classification Internationale des Brevets (IPC):
*G01C 21/00* (2006.01)    *G01C 21/16* (2006.01)
*G01C 21/28* (2006.01)    *G01S 19/45* (2010.01)
*G01S 19/48* (2010.01)    *G01S 19/47* (2010.01)
*G01S 19/49* (2010.01)    *G05D 1/00* (2024.01)

(52) Classification Coopérative des Brevets (CPC):
**G01C 21/165; G01C 21/005; G01C 21/28; G01S 19/45; G01S 19/47; G01S 19/48; G01S 19/49; G05D 1/027; G05D 1/0278**

(86) Numéro de dépôt international:
**PCT/FR2023/050268**

(87) Numéro de publication internationale:
**WO 2023/166260 (07.09.2023 Gazette 2023/36)**

(54) **PROCEDE ET DISPOSITIF D'AIDE A LA NAVIGATION BASEE SUR UN FILTRE DE KALMAN**

NAVIGATIONSUNTERSTÜTZUNGSVERFAHREN UND -VORRICHTUNG AUF DER BASIS EINES KALMAN-FILTERS

NAVIGATION ASSISTANCE METHOD AND DEVICE BASED ON A KALMAN FILTER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **04.03.2022 FR 2201907**

(43) Date de publication de la demande:
**08.01.2025 Bulletin 2025/02**

(73) Titulaires:
• **SAFRAN**
**75015 Paris (FR)**
• **Association pour la Recherche et le Développement**
**des Méthodes et Processus Industriels (ARMINES)**
**75272 Paris Cedex 06 (FR)**

(72) Inventeurs:
• **BARRAU, Axel**
**77550 MOISSY-CRAMAYEL (FR)**
• **PARELLIER, Colin**
**77550 MOISSY-CRAMAYEL (FR)**
• **BONNABEL, Silvère**
**75272 PARIS CEDEX 06 (FR)**

(74) Mandataire: **Cabinet Beau de Loménie**
**103, rue de Grenelle**
**75340 Paris Cedex 07 (FR)**

(56) Documents cités:
• **ERIC ABBOTT ET AL: "Land-Vehicle Navigation Using GPS", PROCEEDINGS OF THE IEEE, IEEE. NEW YORK, US, vol. 87, no. 1, 1 January 1999 (1999-01-01), XP011044133, ISSN: 0018-9219**
• **KARKEE M ET AL: "Local and global sensitivity analysis of a tractor and single axle grain cart dynamic system model", BIOSYSTEMS ENGINEERING, ELSEVIER, AMSTERDAM, NL, vol. 106, no. 4, 1 August 2010 (2010-08-01), pages 352 - 366, XP027172903, ISSN: 1537-5110, [retrieved on 20100602]**
• **TAK KIT LAU ET AL: "Inertial-Based Localization for Unmanned Helicopters Against GNSS Outage", IEEE TRANSACTIONS ON AEROSPACE AND ELECTRONIC SYSTEMS, IEEE SERVICE CENTER, PISCATAWAY, NJ, US, vol. 49, no. 3, 1 July 2013 (2013-07-01), pages 1932 - 1949, XP011519675, ISSN: 0018-9251, DOI: 10.1109/ TAES.2013.6558029**

EP 4 487 079 B1

**Description**

Technique antérieure

L'invention se rapporte au domaine général des mesures réalisées à l'aide de capteurs, telles que la position et la vitesse d'un véhicule.

Elle concerne plus particulièrement le contrôle de la navigation d'un véhicule à l'aide d'un filtre de Kalman. Ce filtre de Kalman sert à estimer une grandeur nécessaire pour la mise en œuvre d'une manœuvre de navigation de ce véhicule. Cette grandeur représente par exemple une caractéristique du véhicule lui-même (ex. la position, la vitesse, l'orientation etc.), ou peut également représenter une caractéristique relative à l'environnement (la présence d'un objet à proximité du véhicule, la vitesse du vent etc.). Par la suite, de telles caractéristiques, qu'elles soient internes ou externes au véhicule, seront appelées « états ».

Notons qu'un filtre de Kalman estime également des incertitudes, sous forme de matrices de covariances, sur l'estimation des états. Ces incertitudes estimées peuvent aussi servir à la mise en œuvre d'une manœuvre. Le terme « grandeur » pourra donc également désigner de telles incertitudes estimées par le filtre de Kalman.

De façon connue, dans un système de navigation on se sert fréquemment d'un filtre de Kalman en tant qu'estimateur d'état. Le filtre de Kalman évalue l'état $x_n$ récursivement, à chaque instant n, à partir d'un modèle numérique (notamment un modèle décrivant comment les différents états évoluent les uns en fonction des autres, et comment les mesures dépendent des états) et d'informations recueillies par des capteurs, ci-après appelées « mesures ».

Par exemple, dans un système de navigation qui génère une estimation de la position, de l'orientation et de la vitesse d'un objet cible, le modèle comprend notamment des équations cinématiques régissant la trajectoire d'un véhicule selon sa position, son orientation et sa vitesse. Le modèle peut impliquer certains paramètres dont les valeurs sont connues a priori (ex. l'accélération de la pesanteur) et/ou dont les valeurs peuvent varier selon le pas de temps n.

Dans la suite de la demande, pour évoquer la temporalisation n, les expressions « moment », « étape » et « instant » donné seront utilisées indifféremment.

L'intervalle de temps entre deux de ces instants successifs est généralement un paramètre ajustable par l'utilisateur.

Dans le domaine des systèmes de navigation, les capteurs sont souvent associés à une unité de mesure inertielle.

Par exemple, en navigation, il est courant d'utiliser une unité de mesure inertielle couplée à un récepteur GPS pour estimer la position et l'orientation d'un véhicule. L'unité de mesure inertielle, comportant des gyroscopes et des accéléromètres, évalue respectivement les changements d'orientation et les forces successives auxquels est soumis le porteur mobile. Par simple opération mathématique d'intégration, ces mesures permettent d'estimer l'état du véhicule en termes de position, vitesse et orientation. L'information communiquée par les GPS permet de calculer la position du véhicule. Un filtre de Kalman fusionne ces informations pour estimer l'état du véhicule. La qualité de la fusion se fait, entre autres, via un bon calibrage des paramètres du filtre. Les modèles et les méthodes de fusion de données sont connus et ne seront pas exposés plus en détail.

La ou les grandeurs estimées par le filtre de Kalman, et l'utilisation de ces estimations, varient selon l'application. Notamment :

- l'estimation porte par exemple sur l'état du véhicule et l'estimation peut servir pour mettre à jour une carte routière affichée au conducteur du véhicule et/ou pour décider quelles directions lui seront données pour parvenir au but de son voyage ;
- dans un système équipé de capteurs radar, l'estimation peut porter sur les états d'objets à proximité du véhicule et cette estimation peut servir d'indication de la position de ces objets afin que la trajectoire du véhicule soit adaptée ;
- dans un véhicule autonome, l'estimation porte par exemple sur le véhicule et peut renseigner un module de commande qui pilote le véhicule permettant à ce dernier de décider de la prochaine manœuvre, etc.

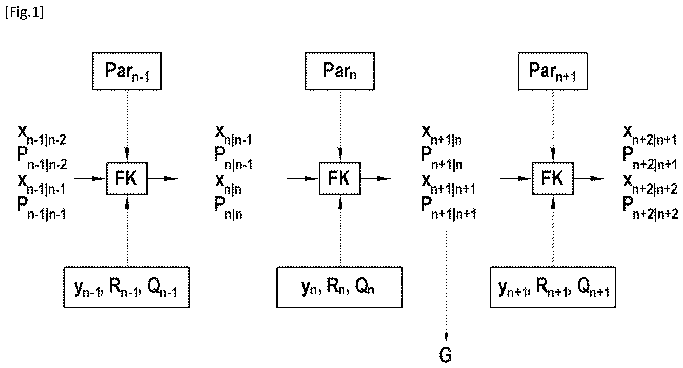

Le filtre de Kalman détermine, récursivement, une estimation $x_{n|n}$ de l'état actuel de l'objet cible en se servant de l'estimation précédente ainsi que des mesures fournies par des capteurs jusqu'à l'instant n. Ce calcul récursif est illustré de manière schématique par la figure 1.

Même avec un modèle mathématique approprié, la qualité des mesures fournies par le ou les capteurs a une influence importante sur la qualité des estimations par le filtre de Kalman.

Pour apprécier cette importance de la qualité des mesures, il convient tout d'abord de rappeler le fonctionnement classique d'un filtre de Kalman.

On notera $x_n$ l'état qu'estime le filtre de Kalman à une étape n donnée. Dans beaucoup d'applications l'état s'exprime en termes d'une pluralité de variables et, donc, $x_n$ constitue un vecteur.

Le système évolue selon le modèle numérique et, donc, on peut considérer que l'état $x_n$ de l'objet cible à un moment donné n dépend de l'état $x_{n-1}$ de l'instant précédent n-1 selon l'équation [Math. 1] ci-dessous :

[Math. 1]

$$x_n = F_n x_{n-1} + B_n u_n + w_n$$

Où $F_n$ est une matrice carrée connue, un un vecteur d'entrée de commande (connu de l'utilisateur), c'est-à-dire une action appliquée au système, $B_n$ la matrice représentant le modèle qui lie l'état $x_n$ à cette entrée de commande, et $w_n$ une variable aléatoire gaussienne centrée représentant un bruit de covariance représentée par une matrice $Q_n$.

Dans l'équation [Math.1] et les équations suivantes, la notation côte à côte de deux quantités correspond à :

- un simple produit si ces deux quantités sont des nombres,
- un produit d'une matrice avec un vecteur si l'une de ces quantité est une matrice et l'autre quantité est un vecteur (par exemple $F_n$ $x_{n-1}$ dans l'équation [Math. 1]), ou
- un produit matricielle si ces deux quantités sont des matrices (par exemple $F_n$ $P_{n-1|n-1}$ dans l'équation [Math. 4] ci-après).

La ou les mesures, notamment celle(s) délivrée(s) par le(s) capteur(s), à l'instant n, seront notées $y_n$ et dépendent de l'état $x_n$ selon l'équation [Math. 2] ci-dessous :

[Math. 2]

$$y_n = H_n x_n + v_n$$

**Où** $H_n$ est une matrice d'observation connue, et $v_n$ une variable aléatoire gaussienne centrée représentant du bruit de covariance $R_n$. Encore une fois, dans beaucoup d'applications, une pluralité de mesures est délivrée au filtre de Kalman à chaque instant n et, dans ce cas, $y_n$ et $v_n$ seront des vecteurs et $R_n$ une matrice.

Lors de l'implémentation pratique d'un filtre de Kalman il faut choisir les matrices de covariance du bruit, $Q_n$ et $R_n$. Souvent cela se fait en étudiant au préalable comment ces covariances se rapportent aux données obtenues dans le domaine en question. Une approche typique pour estimer les covariances consiste en l'application de l'algorithme ALS (pour « autocovariance least-squares » en anglais).

Les matrices de covariance du bruit $Q_n$ et $R_n$ correspondent à des incertitudes sur les mesures effectuées par les capteurs. Ainsi, dans la présente demande, et par souci de concision, nous nous référerons à ces quantités sous le terme d'incertitude sur la mesure $y_n$.

Le filtre de Kalman maintient une estimation de l'état $x_n$ à un moment donné n, et cette estimation sera notée $x_{n|n-1}$ lorsqu'elle est calculée (prédite) à partir des mesures $y_{n-1}$ disponibles au moment n-1, et $x_{n|n}$ lorsque le calcul intègre les mesures $y_n$ obtenues au moment n. Le filtre de Kalman estime aussi une matrice de covariance $P_n$ représentative de l'incertitude de l'estimation de l'état $x_n$ et cette matrice sera notée $P_{n|n-1}$ lorsqu'elle s'applique à l'estimation $x_{n|n-1}$, et $P_{n|n}$ lorsqu'elle s'applique à l'estimation $x_{n|n}$.

A chaque étape n, le filtre fonctionne en deux temps.

Dans un premier temps, le filtre de Kalman prédit l'estimation de l'état a priori $x_{n|n-1}$ de l'objet cible, ainsi que la matrice de covariance $P_{n|n-1}$, à partir de l'estimation de l'état $x_{n-1|n-1}$ et de la matrice de covariance $P_{n-1|n-1}$, selon les équations [Math. 3] et [Math. 4] ci-dessous :

[Math. 3]

$$x_{n|n-1} = F_n x_{n-1|n-1} + u_n$$

[Math. 4]

$$P_{n|n-1} = F_n P_{n-1|n-1} F_n{}^T + Q_n$$

Où $F_n{}^T$ est la transposée de la matrice $F_n$.

Dans un second temps, le filtre de Kalman met à jour l'estimation a priori de l'état de l'objet cible en se servant de la prédiction faite à l'étape précédente et prenant en compte les mesures $y_n$ actuelles avec une certaine pondération représentée par un coefficient $K_n$ nommé « le gain de Kalman ». La mise à jour se fait selon les équations [Math. 5] et [Math. 6] ci-dessous :

[Math. 5]

$$x_{n|n} = x_{n|n-1} + K_n\big(y_n - H_n x_{n|n-1}\big) = x_{n|n-1} + K_n z_n$$

[Math. 6]

$$P_{n|n} = (I - K_n H_n) P_{n|n-1}$$

où $K_n$ est calculé selon l'équation [Math. 7] ci-dessous :

[Math. 7]

$$K_n = P_{n|n-1} H_n{}^T S_n^{-1}$$

où $S_n$, qui représente la covariance des mesures $y_n$ est calculée selon l'équation [Math. 8] ci-dessous :

[Math. 8]

$$S_n = H_n P_{n|n-1} H_n{}^T + R_n$$

$S_n^{-1}$ est la matrice inverse de $S_n$, et $z_n$ est définie selon l'équation [Math. 9] ci-dessous :

[Math. 9]

$$z_n = y_n - H_n\, x_{n|n-1}$$

Le filtre de Kalman émet en sortie l'estimation actuelle $x_{n|n}$ de l'état courant et l'incertitude $P_{n|n}$ associée à cette estimation, ces grandeurs étant délivrées, selon l'application, à un système de commande ou autre.

Tant que le filtre de Kalman présume que les mesures issues du GPS sont fiables, une erreur de mesure, même faible, fera écarter l'estimation plus ou moins fortement de la situation réelle.

Ainsi, la donnée des valeurs d'incertitude associée à une estimation ne suffit pas pour évaluer la fiabilité des mesures et des estimations par le filtre de Kalman, ni ne permet de détecter quelle mesure ou quel capteur est responsable d'une mauvaise robustesse de cette estimation.

L'invention vise à pallier ces inconvénients.

Par ailleurs, le document "ERIC ABBOTT ET AL: "Land-Vehicle Navigation Using GPS",PROCEEDINGS OF THE IEEE, IEEE. NEW YORK, US, vol. 87, no. 1, 1 janvier 1999" décrit une méthode d'analyse de sensibilité qui consiste à analyser les contributions individuelles de différentes données d'entrée (i.e. des mesures de différents capteurs) aux erreurs d'estimation d'une grandeur (une position d'un véhicule par exemple) par un filtre de Kalman en comparant l'estimation par le filtre et l'estimation de cette grandeur par un modèle de référence.

Le document "KARKEE M ET AL: "Local and global sensitivity analysis of a tractor and single axle grain cart dynamic system model",BIOSYSTEMS ENGINEERING, ELSEVIER, AMSTERDAM, NL, vol. 106, no. 4, 1 août 2010" illustre le principe de l'utilisation de dérivées partielles en général pour analyser la sensibilité d'une estimation par rapport à des paramètres dont dépend ladite estimation.

Exposé de l'invention

Ainsi, et selon un premier aspect, l'invention propose un procédé de contrôle de navigation d'un véhicule pour la mise en œuvre d'une manœuvre de navigation, selon la revendication 1. Le procédé comprend entre autres, les étapes :

- d'estimation d'une grandeur par un filtre de Kalman à partir de paramètres, d'un modèle numérique du véhicule dans son environnement, et d'au moins une mesure effectuée par au moins un capteur et associée à une incertitude sur cette mesure, ladite grandeur servant à la mise en œuvre de ladite manœuvre de navigation ;
- de détermination d'au moins une valeur de dérivée partielle de ladite grandeur par rapport à ladite au moins une mesure. ;
- d'obtention d'au moins une valeur de criticité de ladite au moins une mesure pour ladite estimation, à partir de ladite au moins une valeur de dérivée partielle ;

- d'envoi d'au moins un signal de criticité représentatif de ladite au moins une valeur de criticité ;
- de réception d'au moins une instruction en réponse à ladite étape d'envoi ; et
- d'application de ladite au moins une instruction ;

une dite instruction indiquant une commande de contrôle pour la mise en œuvre de ladite manœuvre de navigation.

Corrélativement l'invention propose un système de contrôle de navigation d'un véhicule pour la mise en œuvre d'une manœuvre de navigation, selon la revendication 9. Le système comprend entre autres:

- un module d'estimation d'une grandeur par un filtre de Kalman à partir de paramètres, d'un modèle numérique du véhicule dans son environnement, et d'au moins une mesure effectuée par au moins un capteur et associée à une incertitude sur cette mesure, ladite grandeur servant à la mise en œuvre de ladite manœuvre de navigation ;
- un module de détermination d'au moins une valeur de dérivée partielle de ladite grandeur par rapport à ladite au moins une mesure ;
- un module d'obtention d'au moins une valeur de criticité de ladite au moins une mesure pour ladite estimation, à partir de ladite au moins une valeur de dérivée partielle ;
- un module d'envoi d'au moins un signal de criticité représentatif de ladite au moins une valeur de criticité ;
- un module de réception d'au moins une instruction en réponse à ladite étape d'envoi ; et
- un module d'application de ladite instruction ;

une dite instruction indiquant une commande de contrôle pour la mise en œuvre de ladite manœuvre de navigation.

Selon un mode de mise en œuvre du procédé de contrôle une dite instruction indique d'ajouter des mesures pour une estimation ultérieure de ladite grandeur.

Précisons ici que l'emploi du terme de dérivée partielle englobe ici la notion de gradient. En effet, une mesure ou une incertitude peut contenir plusieurs quantités (vitesse, position etc.) et peut donc être représentée sous la forme d'un vecteur.

Dans ce cas, par souci de concision, on emploiera également le terme de dérivée partielle de la grandeur par rapport à une quantité. Autrement dit, dans la présente demande, si une quantité est sous la forme d'un vecteur, la dérivée partielle de la grandeur par rapport à cette quantité désigne le gradient de cette grandeur selon le vecteur représentant la quantité.

Egalement par souci de concision, on appellera valeur d'une dérivée partielle de la grandeur par rapport à une mesure l'ensemble des valeurs que comprend le gradient de la grandeur selon le vecteur représentant cette mesure.

Précisons également que dans la présente demande, la valeur d'une dérivée partielle d'une grandeur par rapport à une première matrice (par exemple une matrice représentant des incertitudes sur une mesure) correspond à une deuxième matrice dont les composants sont égaux aux valeurs de dérivées partielles de cette grandeur par rapport à chacun des composants de la première matrice.

Dans la présente demande, si une somme entre deux vecteurs (par exemple deux dérivées partielles sous la forme de vecteurs) est invoquée, cette somme correspond à un vecteur égal à la somme élément par élément de ces deux vecteurs.

L'évaluation de ces dérivées partielles permet avantageusement de fournir des informations importantes sur la robustesse de l'estimation d'une grandeur nécessaire à la mise en œuvre d'une manœuvre de navigation, en particulier en permettant de quantifier la criticité des différentes mesures dans cette estimation.

Les informations obtenues sur la robustesse de l'estimation de la grandeur indiquent s'il est pertinent ou non de rajouter une mesure pour estimer la grandeur, parmi l'ensemble des mesures disponibles, ou d'appliquer une commande de contrôle, qui correspond par exemple à l'annulation de la manœuvre envisagée.

En effet, d'une part, une ou des dérivées partielles d'une grandeur par rapport à une mesure effectuée à un instant donné, ou par rapport à des mesures effectuées lors d'une plage de temps donnée, permet d'évaluer l'influence des mesures sur l'estimation de la grandeur au cours du temps.

Par exemple, si une dérivée partielle par rapport à une mesure prend une grande valeur pour la mesure effectuée à l'instant précédent l'estimation de la grandeur, mais prend des valeurs proches de zéro pour la mesure effectuée aux instants antérieurs, cela signifie que seule la mesure effectuée à l'instant précédent l'estimation est prise en compte de manière significative dans cette estimation.

Ce cas de figure peut dénoter un manque de robustesse de l'estimation, dans le cas où une estimation robuste nécessite la prise en compte de plusieurs mesures successives.

Dans cet exemple, l'estimation peut être améliorée en augmentant la fréquence des mesures prises au cours du temps.

Ainsi, selon un mode de mise en œuvre du procédé de contrôle :

- des mesures effectuées successivement sont obtenues, et
- au cours de ladite étape de détermination, pour chacune de ces mesures, une valeur de dérivée partielle de la grandeur est déterminée par rapport à cette mesure.

Dans ce mode de réalisation, le calcul de dérivées partielles est réalisé a posteriori. Autrement dit, la grandeur est obtenue après l'obtention des mesures par rapport auxquelles les valeurs de dérivée partielle de la grandeur sont calculées.

Par exemple, les dérivées partielles d'une estimation $x_{n|n}$ à l'instant n sont calculées par rapport à la série de mesures prise en compte entre les instants 0 et n ; ainsi, le calcul de ces dérivées partielles est réalisé suite à l'obtention de l'estimation $x_{n|n}$.

D'autre part une ou des dérivées partielles d'une grandeur par rapport à une mesure effectuée par un capteur donné, ou par rapport à des mesures effectuées par un ensemble de capteurs donnés, permettent d'évaluer l'influence du capteur ou de l'ensemble des capteurs sur l'estimation.

Par exemple, si une dérivée partielle par rapport à une mesure prend une valeur faible alors que les connaissances de l'homme du métier indiquent que la grandeur estimée est généralement très influencée par cette mesure (par exemple, l'estimation de la vitesse d'un véhicule est très influencée par la mesure de son accélération), alors cela indique que l'estimation n'est pas robuste.

Selon un mode de mise en œuvre du procédé de contrôle, pour au moins un instant donné, une dite valeur de dérivée partielle est déterminée au cours de ladite étape de détermination, par rapport à une mesure, cette mesure comportant au moins deux mesures effectuées chacune par des capteurs distincts à cet instant donné.

Rappelons que, comme expliqué ci-avant, une mesure peut correspondre à un vecteur dont les composantes sont des mesures de différents états. Par exemple, une dite mesure à un instant donné peut par exemple comporter une mesure de l'accélération du véhicule à cet instant donné ainsi qu'une mesure de la vitesse du véhicule à cet instant donné.

Rappelons également que dans ce mode de mise en œuvre, une dérivée partielle de la grandeur par rapport à cette mesure est un vecteur dont les composants sont égaux aux dérivées partielles de la grandeur par rapport à chacune des mesures des différents états. Par exemple, la dérivée partielle de la grandeur par rapport à une mesure d'accélération et de vitesse comporte la dérivée partielle de la grandeur par rapport à la mesure de vitesse ainsi que la dérivée partielle de la grandeur par rapport à la mesure d'accélération.

Le calcul des dérivées partielles d'une grandeur estimée par un filtre de Kalman est, de façon avantageuse, peu coûteux en termes de puissance de calcul et de capacité de stockage.

Le calcul des dérivées partielles de la grandeur estimée exploite certaines valeurs qui sont déjà calculées lors du fonctionnement d'un filtre de Kalman en tant qu'estimateur d'états. De ce fait, la mise en œuvre de l'invention ne nécessite que l'ajout de quelques moyens additionnels peu coûteux en termes de temps et de puissance de calcul.

A partir des valeurs de dérivées partielles, le procédé permet d'obtenir une valeur de criticité pour caractériser la criticité, pour l'estimation de la grandeur, d'une mesure. Autrement dit, une valeur de criticité quantifie l'influence d'une ou plusieurs mesures sur l'estimation de la grandeur. Dans un premier exemple, une ou des valeurs de criticité peuvent être égales aux valeurs de dérivées partielles, étant donné que ces valeurs permettent de caractériser la criticité de mesures pour l'estimation de la grandeur.

Ainsi, selon un mode de mise en œuvre du procédé de contrôle, la au moins une valeur de criticité est égale à la au moins une valeur de dérivée partielle déterminée au cours de ladite étape de détermination.

En particulier dans le cas d'un système muni d'un seul capteur qui ne donne qu'une mesure à la fois, les dérivées partielles de la grandeur par rapport aux mesures effectuées au cours du temps par ce seul capteur permettent d'estimer la robustesse de l'estimation de la grandeur.

Cependant, suivant la manœuvre de navigation à effectuer, il peut être avantageux de définir autrement la ou les valeurs de criticité.

Par exemple, selon un mode particulier du procédé de contrôle, la ou les valeurs de criticité sont égales aux valeurs absolues des valeurs de dérivées partielles.

En effet, selon la manœuvre de navigation à mettre en œuvre, l'amplitude de la criticité d'une mesure sur l'estimation de la grandeur, quantifiée par la valeur absolue de la dérivée partielle par rapport à cette mesure, est pertinente.

Dans un autre exemple, les valeurs de criticité sont égales aux valeurs absolues des valeurs de dérivées partielles normalisées, de telle sorte que la somme de ces valeurs de criticité est égale à 1.

La normalisation des valeurs absolues des valeurs dérivées partielles par rapport à différentes mesures permet notamment de comparer la criticité d'une mesure pour l'estimation d'une grandeur, relativement aux criticités des autres mesures utilisées pour cette même estimation.

Dans un autre exemple où sont déterminées plusieurs valeurs de dérivées partielles par rapport à des mesures prises successivement au cours du temps, les valeurs de criticité sont égales à des différences de deux valeurs de dérivées partielles par rapport à deux mesures effectuées successivement. De telles valeurs de criticité permettent de détecter une variation éventuellement trop grande, à un instant donnée, de la criticité d'une mesure pour l'estimation de la grandeur, et ainsi de détecter une mauvaise robustesse de l'estimation à cet instant donné.

Il peut être avantageux de caractériser la criticité d'un groupe de mesures pour l'estimation de la grandeur, par exemple des mesures prises successivement au cours d'une plage de temps donnée, ou des mesures prises par un groupe de capteurs.

A cet effet, une valeur de criticité peut être égale à une somme sur les valeurs de dérivées partielles par rapport aux mesures parmi un groupe de mesures.

Ainsi, selon un mode de réalisation particulier du procédé de contrôle :

- plusieurs valeurs de dérivées partielles sont déterminées au cours de ladite étape de détermination,
- ladite au moins une valeur de criticité est égale à une somme desdites valeurs de dérivée partielle.

Selon un autre mode de réalisation du procédé de contrôle :

- plusieurs valeurs de dérivées partielles sont déterminées au cours de ladite étape de détermination ;
- ladite au moins une valeur de criticité est égale à une somme de produits entre :

   (i) une dite valeur de dérivée partielle par rapport à une dite mesure, et
   (ii) ladite incertitude sur cette mesure.

Autrement dit, dans ce mode de mise en œuvre, une valeur de criticité est une somme de valeurs de dérivées partielles par rapport à des mesures, cette somme étant pondérée par les incertitudes sur ces mesures.

Ce mode de réalisation permet avantageusement, et de façon simple, de détecter si des mesures incertaines ont une criticité élevée pour l'estimation de la grandeur. Si une telle valeur de criticité est élevée, cela signifie donc que l'estimation de la grandeur n'est pas robuste.

L'invention permet également de déterminer une valeur de criticité similairement au mode de réalisation précédent, à partir d'une seule valeur de dérivée partielle.

Ainsi, selon un mode de réalisation du procédé de contrôle, ladite au moins une valeur de criticité est égale à un produit entre :

   (i) une dite valeur de dérivée partielle par rapport à une dite mesure, et
   (ii) ladite incertitude sur cette mesure.

Afin de permettre l'utilisation de la ou des valeurs de criticité, le procédé de contrôle indique l'envoi d'un ou

7

plusieurs signaux de criticité représentatifs de ces valeurs de criticité. Dans le système de contrôle de navigation permettant la mise en œuvre du procédé décrit précédemment, ce ou ces signaux de criticité sont envoyés vers un module de réception qui permet de mettre en œuvre l'étape de réception du procédé.

Par construction, ce ou ces signaux de criticité contiennent une ou plusieurs informations sur la robustesse de l'estimation de la grandeur, cette information permettant de prendre une décision par rapport à la mise en œuvre de la manœuvre de navigation.

Dans un mode de réalisation de l'invention, le ou les signaux de criticité comportent des valeurs égales aux valeurs de criticité.

Selon l'invention, le ou les signaux de criticité sont définis à partir de la comparaison des valeurs de criticité avec un ou plusieurs seuils.

Ainsi, selon l'invention, l'étape d'envoi comporte les sous-étapes :

- de comparaison entre ladite au moins une valeur de criticité et au moins un seuil, ledit au moins un seuil étant défini par rapport à ladite manœuvre ;
- de génération dudit au moins un signal de criticité en fonction d'un résultat de ladite comparaison.

Corrélativement, l'invention propose un système de contrôle dans lequel ledit module d'envoi comporte les sous-modules :

- de comparaison entre ladite au moins une valeur de criticité et au moins un seuil, ledit au moins un seuil étant défini par rapport ladite manœuvre ;
- de génération dudit au moins un signal de criticité en fonction d'un résultat de la comparaison par ledit sous-module de comparaison.

La connaissance par l'homme du métier de la manœuvre de navigation à mettre en œuvre, notamment du fonctionnement des capteurs effectuant les mesures, permet de définir un ou plusieurs seuils.

Le ou les signaux de criticité résultant de la comparaison de la ou des valeurs de criticité avec ce ou ces seuils ont l'avantage d'être des indicateurs facilement lisibles de la robustesse de l'estimation de la grandeur.

Notamment, un tel signal de criticité peut être un nombre binaire, indiquant la bonne ou la mauvaise robustesse de l'estimation.

Le ou les signaux de criticité peuvent être traités automatiquement ou bien traités par un utilisateur auquel est présenté, par l'intermédiaire de ce module de réception, le ou les signaux de criticité.

Par suite, une ou plusieurs instructions, par exemple déterminées automatiquement ou par l'utilisateur, sont reçues par le module de réception, puis appliquées. Par exemple, la ou les instructions sont déterminées en fonction du ou des signaux de criticité.

Une instruction peut concerner un contrôle du véhicule lui-même. Notamment, si une mauvaise robustesse de l'estimation de la grandeur est détectée, l'instruction peut indiquer un arrêt temporaire de la mise en œuvre de la manœuvre de navigation ou l'annulation de celle-ci.

Un tel arrêt temporaire de la manœuvre de navigation permet notamment d'assurer la sécurité de la navigation, jusqu'à ce qu'une estimation plus robuste de la grandeur soit obtenue.

Si par contre une bonne robustesse de l'estimation de la grandeur est détectée, une instruction peut indiquer le prolongement de la manœuvre.

Une instruction peut également indiquer, dans un mode de réalisation particulier, qu'il est souhaitable de prendre en compte une ou des mesures supplémentaires parmi l'ensemble des mesures disponibles fournies par les capteurs, afin d'effectuer une estimation plus robuste de la grandeur.

L'invention propose également un système de navigation d'un véhicule, selon la revendication 10, ledit système de navigation étant adapté pour réaliser les fonctions du système de contrôle selon l'un des modes de réalisation décrits ci-avant, et comprenant au moins un capteur destiné à obtenir au moins une mesure servant à l'estimation d'une grandeur, ladite grandeur servant à la mise en œuvre d'une manœuvre de navigation.

Selon un mode de réalisation de ce système de navigation, au moins un dit capteur est une unité de mesure inertielle.

Dans un tel système, le jeu de capteurs peut par exemple comporter au moins un capteur GPS associé à une unité de mesure inertielle. Il s'agit d'une configuration de capteurs que l'on retrouve habituellement embarqué sur un véhicule, drone ou autre.

L'invention propose un programme informatique selon la revendication 12, comportant des instructions pour l'exécution des étapes d'un procédé de contrôle selon l'un quelconque des modes de mise en œuvre décrits ci-avant.

Il est à noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose un support d'enregistrement, selon la revendication 13, lisible par un équipement informatique d'un programme informatique comportant des instructions pour l'exécution des étapes d'un procédé selon l'un des modes de réalisation décrits ci-avant.

Les supports d'enregistrement mentionnés dans le présent exposé peuvent être n'importe quelle entité ou dispositif capable de stocker le programme et d'être lu par un appareil de commande ou par tout équipement informatique, notamment un ordinateur.

Par exemple, le support peut comporter un moyen de stockage, ou encore un moyen d'enregistrement magnétique, par exemple un disque dur.

Alternativement, les supports d'enregistrement peuvent correspondre à un circuit intégré à un ordinateur ou à un système de navigation, circuit dans lequel le programme est incorporé, et adapté pour exécuter un procédé tel que décrit ci-avant ou pour être utilisé dans l'exécution de ce procédé.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

[Fig. 1] la figure 1 représente de manière schématique le fonctionnement récursif d'un filtre de Kalman ;

[Fig. 2] la figure 2 un procédé de contrôle de navigation conforme à un premier mode particulier de mise en œuvre de l'invention ;

[Fig. 3] la figure 3 représente un système de contrôle de navigation conforme à un premier mode particulier de mise en œuvre de l'invention ;

[Fig. 4] la figure 4 un procédé de contrôle de navigation conforme à un deuxième mode particulier de mise en œuvre de l'invention ;

[Fig. 5] la figure 5 représente un système de contrôle de navigation conforme à un deuxième mode particulier de mise en œuvre de l'invention ;

[Fig. 6] la figure 6 représente un système de navigation conforme à un mode particulier de mise en œuvre de l'invention ;

[Fig. 7] la figure 7 représente l'architecture matérielle d'un système de contrôle de navigation selon un mode particulier de mise en œuvre de l'invention ;

[Fig. 8] la figure 8 représente des valeurs de dérivées partielles par rapport à des mesures effectuées successivement, pour deux intervalles de temps différents entre les mesures successives.

Description des modes de réalisation

Nous allons maintenant décrire plusieurs modes de réalisation de l'invention. D'une façon générale, et comme mentionné précédemment, l'invention propose un procédé de contrôle de navigation d'un véhicule Veh pour la mise en œuvre d'une manœuvre nécessitant l'estimation d'une grandeur G.

La figure 1 représente le processus itératif d'estimation d'une grandeur G à chaque instant n par un filtre de Kalman FK.

Cette grandeur, à l'instant n, est par exemple la valeur $x_{n|n}$ d'un état estimé par le filtre de Kalman FK, ou bien d'une incertitude $P_{n|n}$ sur l'estimation de cet état. D'une façon générale, cette grandeur peut correspondre à toute quantité estimée par le filtre de Kalman FK, et requise pour la mise en œuvre d'une manœuvre de navigation $Man_j$.

A un instant n donné, le filtre de Kalman utilise les paramètres $Par_n$ correspondant à un modèle numérique du véhicule dans son environnement, pour estimer des quantités dont la grandeur, à partir de quantités estimées par ce filtre de Kalman à l'instant précédent n-1.

Notons que sur la figure 1, l'estimation de la grandeur à l'instant n utilise également des mesures $y_n$ (et les incertitudes $R_n$ et $Q_n$ sur ces mesures) effectuées à l'instant n. En particulier, l'estimation de cette grandeur prend en compte : une première estimation effectuée sans prendre en compte les mesures à l'instant n, puis une mise à jour de cette estimation avec les mesures $y_n$ et leurs incertitudes $R_n$.

La première estimation est une prédiction à partir de l'instant n-1, puisqu'elle ne nécessite pas d'observation du véhicule et/ou de son environnement à l'instant n.

Si la grandeur correspond à un état, la première estimation correspond à l'équation [Math.3] qui donne une première valeur $x_{n|n-1}$ estimée de l'état, et la mise à jour correspond à l'équation [Math.5] qui donne une valeur $x_{n|n}$ de l'état.

Dans un autre exemple, la grandeur G à l'instant n ne prend pas en compte les mesures effectuées à l'instant n, et est donc prédite à partir des mesures n-1. Dans cet exemple, si la grandeur G correspond à un état, son estimation correspond à la première estimation de la valeur $x_{n|n-1}$.

Une telle estimation est utile dans un cas où la manœuvre de navigation $Man_j$ nécessite la prédiction de la grandeur G à l'instant n avant même d'obtenir les mesures à l'instant n.

Notons que les paramètres $Par_{n-1}$, $Par_n$, $Par_{n+1}$ du modèle numérique peuvent être modifiés entre deux instants successifs.

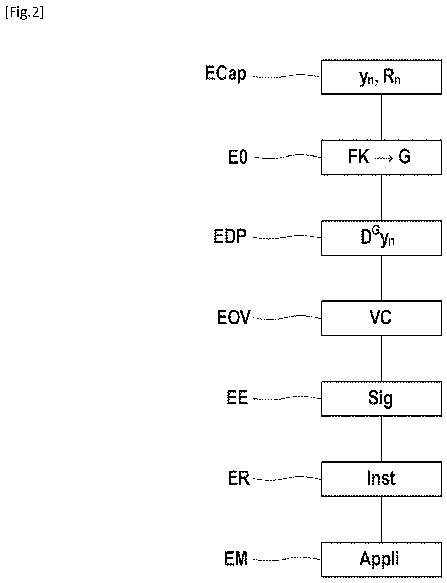

La figure 2 représente les principales étapes d'un procédé de contrôle de navigation destiné à améliorer la sécurité de la mise en œuvre d'une manœuvre de navigation $Man_j$ d'un véhicule Veh, conformément à un mode particulier de réalisation de l'invention.

Lors d'une étape ECap, des mesures $y_1$-$y_n$ et leur incertitudes associées $R_1$-$R_n$ sont obtenues jusqu'à l'instant n via un ou plusieurs capteurs $Cap^1$-$Cap^k$.

Lors d'une étape d'estimation E0, une grandeur G est estimée par le filtre de Kalman à partir de ces mesures $y_1$-$y_n$ et incertitudes $R_1$-$R_n$. L'estimation de cette grandeur est effectuée de manière itérative, comme représenté sur la figure 1 et expliqué ci-avant.

Dans un mode de mise en œuvre particulier, cette estimation de la grandeur correspond à une première estimation de la grandeur sans prendre en compte les mesures à l'instant n suivie d'une mise à jour de cette première estimation avec les mesures à l'instant n. Dans ce mode, l'étape d'estimation correspond à l'estimation de la grandeur à l'instant n.

Dans un autre mode de mise en œuvre, l'étape d'estimation de la grandeur comprend la première estimation de la grandeur, suivie de sa mise à jour par les mesures $y_n$ et incertitudes $R_n$, puis d'une estimation de la grandeur à l'instant n+1, à partir de l'estimation mise à jour de la grandeur à l'instant n. Dans ce mode, l'étape d'estimation correspond à la prédiction de la grandeur à l'instant n+1.

Lors d'une étape EDP, des valeurs de dérivées partielles de la grandeur G par rapport aux mesures sont calculées.

Dans un mode de réalisation, pour calculer les valeurs de dérivées partielles par rapport aux mesures effectuées aux instants qui précèdent n, la technique de rétropropagation est utilisée. Cette technique permet de calculer les dérivées partielles de façon itérative.

En particulier, elle permet de calculer une dérivée partielle de la grandeur par rapport à une mesure $y_{n-1}$ à l'instant n-1 en fonction de la dérivée partielle de la grandeur par rapport à une mesure à l'instant n, puis de calculer une dérivée partielle de la grandeur par rapport à une mesure à l'instant n-2 en fonction de la dérivée partielle de la grandeur par rapport à la mesure à l'instant n-1, et ainsi de suite.

Afin de calculer la dérivée partielle de la grandeur G par rapport à une mesure effectuée à un instant quelconque, la rétropropagation nécessite de combiner :

- d'une part les formules des dérivées partielles de la grandeur G par rapport aux mesures de l'instant n :

$$[\text{Math.10}]$$

$$\frac{\partial G}{\partial y_n} = K_n^T \frac{\partial G}{\partial x_{n|n}}$$

- d'autre part les formules des dérivées partielles par rapport aux quantités estimées par le filtre de Kalman à l'instant précédent n :

[Math.11]

$$\frac{\partial G}{\partial P_{n|n-1}} = (I - K_n H_n)^T \left[ \frac{\partial G}{\partial P_{n|n}} + \frac{1}{2} \frac{\partial G}{\partial x_{n|n}} z_n^T R_n^{-1} H_n + \frac{1}{2} H_n^T R_n^{-1} z_n \left( \frac{\partial G}{\partial x_{n|n}} \right)^T \right] (I - K_n H_n)$$

[Math.12]

$$\frac{\partial G}{\partial x_{n|n-1}} = (I - K_n H_n)^T \frac{\partial G}{\partial x_{n|n}}$$

[Math.13]

$$\frac{\partial G}{\partial P_{n-1|n-1}} = F_n^T \frac{\partial G}{\partial P_{n|n-1}} F_n$$

[Math.14]

$$\frac{\partial G}{\partial x_{n-1|n-1}} = F_n^T \frac{\partial G}{\partial x_{n|n-1}}$$

Où les quantités apparaissant dans ces équations ont été décrites précédemment.

Ainsi, à titre d'exemple, pour calculer la dérivée partielle par rapport aux mesures $y_{n-1}$ effectuées à l'instant n-1, on obtient d'une part, d'après l'équation [Math.10] :

[Math.15]

$$\frac{\partial G}{\partial y_{n-1}} = K_{n-1}^T \frac{\partial G}{\partial x_{n-1|n-1}}$$

Et d'autre part, d'après les équations [Math.14] et [Math.12] :

[Math.16]

$$\frac{\partial G}{\partial x_{n-1|n-1}} = F_n^T \frac{\partial G}{\partial x_{n|n-1}} = F_n^T (I - K_n H_n)^T \frac{\partial G}{\partial x_{n|n}}$$

Si par exemple la grandeur G est l'état $x_{n|n}$ estimé à l'instant n, alors on obtient, en combinant [Math.15] et [Math.16] :

[Math.17]

$$\frac{\partial G}{\partial y_{n-1}} = K_{n-1}^T F_n^T (I - K_n H_n)^T$$

Pour calculer la dérivée partielle par rapport aux mesures $y_{n-2}$ à l'instant n-2, on utilise le même procédé, mais en remplaçant les n des équations précédentes par n-1 :

[Math.18]

$$\frac{\partial G}{\partial y_{n-2}} = K_{n-2}^T \frac{\partial G}{\partial x_{n-2|n-2}} = K_{n-2}^T F_{n-1}^T (I - K_{n-1} H_{n-1})^T \frac{\partial G}{\partial x_{n-1|n-1}}$$

Où la quantité $\partial G / \partial x_{n-1|n-1}$ a été calculée précédemment et n'a donc pas besoin d'être recalculée.

Si l'on poursuit l'exemple dans lequel G correspond à l'état $x_{n|n}$ estimé à l'instant n, on obtient finalement, en utilisant le résultat de la précédente itération :

[Math.21]

$$\frac{\partial G}{\partial y_{n-2}} = K_{n-2}^T F_{n-1}^T (I - K_{n-1} H_{n-1})^T F_n^T (I - K_n H_n)^T$$

Le calcul de dérivées partielles de la grandeur G par rapport aux mesures $y_1$-$y_n$ est assez facile du point de vue de la charge de calcul et du stockage des grandeurs pendant le processus d'estimation, puisque :

- Les opérations matricielles ne sont pas nombreuses ;
- Les dimensions restent limitées aux dimensions de matrices dont les dimensions maximales sont égales aux nombre d'éléments dans les vecteurs d'état $x_{n|n}$ ou aux nombre d'éléments dans les vecteurs de mesures $y_n$ ;
- les termes calculés pour une itération n, par exemple I-$K_n H_n$, peuvent être stockés et réutilisés pour le calcul d'une dérivée partielle par rapport à un élément d'une itération qui précède n ;
- les besoins de stockage lors du processus d'estimation par le filtre de Kalman FK peuvent se limiter aux trois quantités ci-dessous :

  (i) (I-$K_n H_n$), ou $K_n$ et $H_n$, ou $K_n$ et $H_n$
  (ii) $R_n$ ou $S_n$
  (iii) $z_n$, $H_n$ et $F_n$.

Rappelons qu'une mesure effectuée à un instant n donné $y_n$ peut être un vecteur. Chacun des composants $y_n^k$ de ce vecteur étant lui-même une mesure effectuée par un capteur $Cap^k$ à cet instant n donné.

Ainsi, selon un mode de réalisation conforme à l'invention, une mesure $y_n$ comporte plusieurs mesures $y_n^1$-$y_n^k$, chacune de ces mesures étant effectuée par un capteur distinct $Cap^1$-$Cap^k$.

Lors d'une étape EOV, une ou plusieurs valeurs de criticité VC sont déterminées à partir de ces valeurs de dérivées partielles $D^G y_1$-$D^G y_n$.

Dans un mode particulier de mise en œuvre de l'invention, les valeurs de criticité VC sont égales, pour une manœuvre $Man_j$ donnée, aux valeurs de dérivées partielles $D^G y_1$-$D^G y_n$ déterminées lors de l'étape EDP.

Un exemple particulier de manœuvre $Man_j$ est de faire traverser un détroit maritime à un navire, et la grandeur nécessaire à la mise en œuvre de cette manœuvre est une position du navire par rapport aux côtes terrestres.

Les mesures $y_n$ comportent par exemple des mesures d'accélération par un premier capteur (une unité de mesure inertielle par exemple), et des mesures de position par un second capteur (un GPS par exemple), à un instant n donné.

Les valeurs de dérivées partielles $D^G y_n$, et donc les valeurs de criticité VC dans cet exemple, quantifient l'influence de chacune des mesures, à chaque instant n, sur l'estimation de la position du navire.

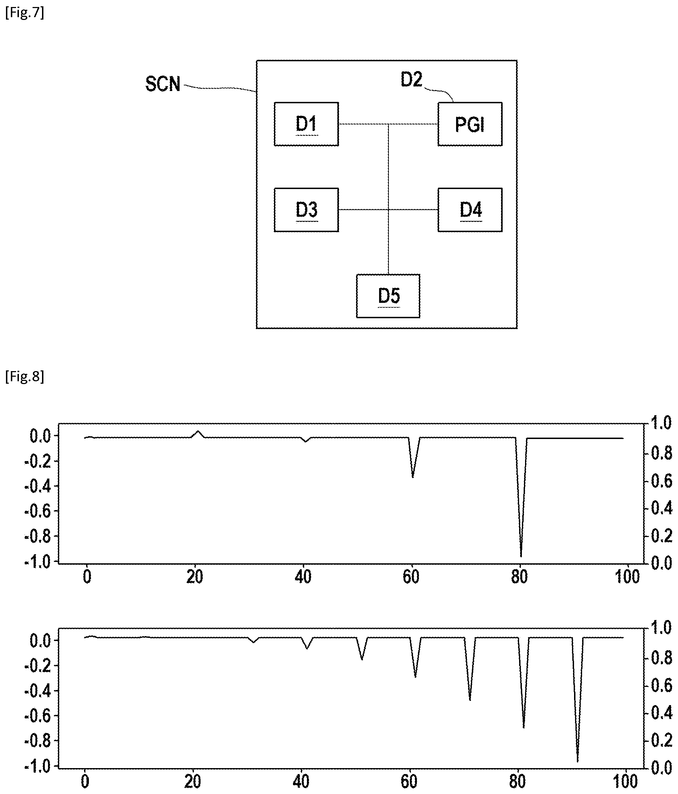

Un tel exemple est illustré sur la figure 8. Sur cette figure sont représentées les valeurs des dérivées partielles de la grandeur G, par rapport à des mesures effectuées successivement au cours du temps, sur une durée de 100 secondes (en abscisse). Dans cet exemple, les mesures sont des mesures de vitesse et la grandeur G est l'estimation de la vitesse à l'instant 100.

En haut de la figure 8, l'intervalle de temps entre deux mesures est 20 secondes : on y voit donc la valeur d'une dérivée partielle toutes les 20 secondes. En bas de la figure 8, l'intervalle de temps est de 10 secondes.

La figure 8 montre que dans ce cas particulier, plus l'intervalle de temps entre deux mesures successives est grand, plus la dernière mesure est critique pour l'estimation de la grandeur.

En effet, en haut de la figure 8, on observe que la dernière valeur de dérivée partielle est trois fois plus grande en valeur absolue que l'avant-dernière valeur de dérivée partielle, et plus de vingt fois plus grande que les valeurs précédentes de dérivées partielles. A l'inverse, en bas de la figure, où l'intervalle de temps entre deux mesures est deux fois moindre, l'écart entre les valeurs de dérivées partielles par rapport à deux mesures successives est beaucoup plus faible.

Ainsi, sur le haut de la figure 8, seule la dernière mesure est critique pour l'estimation de ladite grandeur. Autrement dit, dans ce cas, l'estimation de la grandeur repose essentiellement sur la dernière mesure. Selon la manœuvre à effectuer, cela peut signifier que l'estimation de la grandeur est dans ce cas peu robuste.

Comme le montre le bas de la figure 8, si l'intervalle de temps entre deux mesures successives est réduit, plusieurs mesures influencent sensiblement l'estimation de la grandeur, qui ne repose plus uniquement que sur une seule mesure. Selon la manœuvre à effectuer, cela peut signifier que l'estimation de la grandeur est plus robuste si l'on diminue l'intervalle de temps entre deux mesures.

Dans un autre mode particulier de mise en œuvre de l'invention, la ou les valeurs de criticité sont égales aux valeurs absolues des valeurs de dérivées partielles.

Dans un autre mode particulier de mise en œuvre de l'invention, les valeurs de criticité sont égales aux valeurs absolues des valeurs de dérivées partielles normalisées, de telle sorte que la somme de ces valeurs de criticité est égale à 1.

Dans un autre mode particulier de mise en œuvre de l'invention dans lequel sont déterminées plusieurs valeurs de dérivées partielles par rapport à des mesures prises successivement au cours du temps, les valeurs de criticité sont égales à des différences de deux valeurs de dérivées partielles par rapport à deux mesures prises successivement. De telles valeurs de criticité permettent de détecter une variation éventuellement trop grande, à un instant donnée, de la criticité d'une mesure pour l'estimation de la grandeur, et ainsi de détecter une mauvaise robustesse de l'estimation à cet instant donné.

Dans un autre mode particulier de mise en œuvre de l'invention, les valeurs de criticité sont des sommes sur des valeurs de dérivées partielles.

Par exemple, une valeur de criticité est la somme des mesures effectuées par un capteur sur un intervalle de temps donné. Cela quantifie l'influence des mesures de ce capteur sur l'estimation de la grandeur, lors de cet intervalle de temps.

Dans un autre exemple, une valeur de criticité est la somme des mesures effectuées par l'ensemble des capteurs, à un instant donné. Une telle valeur de criticité quantifie l'influence d'un ensemble de mesures sur l'estimation de la grandeur, à cet instant donné.

Dans un autre mode particulier de mise en œuvre de l'invention, les valeurs de criticité sont des sommes sur des valeurs de dérivées partielles par rapport à des mesures, pondérées par des incertitudes sur ces mesures afin d'homogénéiser (rendre sans unité) les dérivées partielles. De telles valeurs de criticité peuvent être calculées avec la formule :

[Math.20]

$$VC = \sum_{i=m}^{n} R_i \frac{\partial G}{\partial y_i}$$

ou bien la formule :

[Math.21]

$$VC = \sum_{i=m}^{n} Q_i \frac{\partial G}{\partial y_i}$$

où m est un instant précédent l'instant n, ou est l'instant n lui-même, auquel cas la somme de l'équation [Math.20] ou de l'équation [Math.21] ne comprend qu'un seul terme.

De telles valeurs de criticité quantifient l'influence des mesures sur l'estimation de la grandeur G, relativement aux incertitudes sur ces mesures.

Lors de l'étape d'envoi EE, un ou plusieurs signaux de criticité Sig sont obtenus à partir des valeurs de criticité déterminées lors de l'étape EDP. Ces signaux sont représentatifs des valeurs de criticité. Autrement dit, ils contiennent l'information sur l'influence des mesures que quantifient les valeurs de criticité.

Lors de cette même étape EE, ce ou ces signaux de criticité sont envoyés vers un module de réception.

Dans un mode particulier de réalisation de l'invention, les signaux de criticité sont des valeurs identiques aux valeurs de criticité.

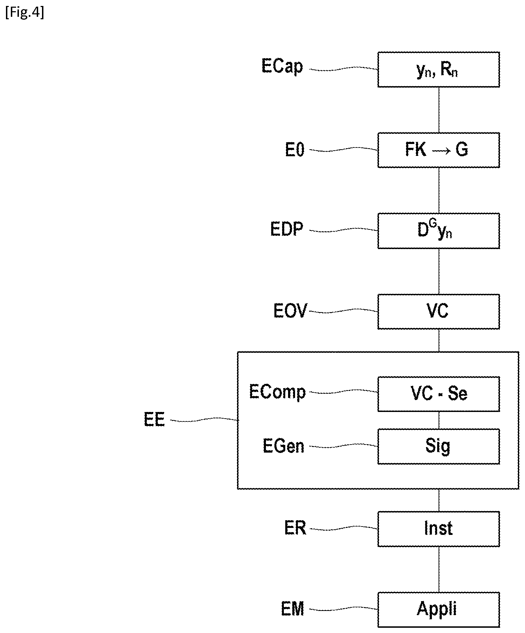

Selon l'invention, comme représenté sur la figure 4, le ou les signaux de criticité sont obtenus par une comparaison entre les valeurs de criticité VC et des seuils Se, au cours d'une sous-étape EComp de l'étape d'envoi EE, puis généré à partir du résultat de cette comparaison au cours d'une sous-étape EGen de l'étape d'envoi.

Par exemple, si une valeur de criticité VC est supérieure à un seuil Se donné, le signal de criticité Sig indique une alerte de sécurité pour la mise en œuvre de la manœuvre Man$_j$ nécessitant l'estimation de la grandeur. Si à l'inverse, cette valeur de criticité VC est inférieure à ce seuil Se, le signal de criticité Sig indique que l'estimation est robuste.

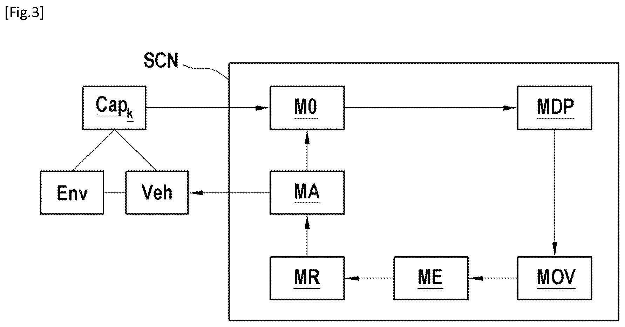

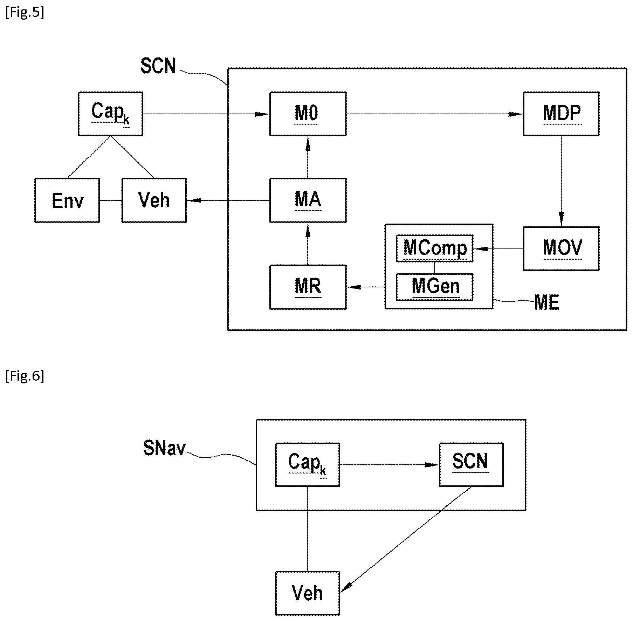

La figure 5 représente un système de contrôle de navigation SCN conforme à un mode de réalisation de l'invention, ce système permettant de mettre en œuvre le mode de réalisation du procédé de contrôle représenté sur la figure 4. Ainsi, le système SCN représenté sur la figure 5 ne diffère du système SCN représenté sur la figure 3 que par la présence des sous-modules de comparaison MComp et de génération MGen dans le module d'envoi ME, ces sous-modules permettant de mettre en œuvre les sous-étapes de comparaison EComp et de génération EGen de signaux de criticité Sig représentées sur la figure 4.

Le signal de criticité Sig est ensuite envoyé à un module de réception MR, puis analysé par un utilisateur ayant accès au module de réception MR. Cet utilisateur envoie en retour une instruction Inst au module de réception MR. Cette instruction Inst est ensuite appliquée, lors d'une étape d'application EA, par un module d'application MA. Dans un autre mode de réalisation, l'analyse du signal de criticité et la détermination de l'instruction peuvent être traitées automatiquement.

L'instruction Inst peut correspondre à une commande de contrôle à appliquer au véhicule. Par exemple, si l'utilisateur déduit du ou des signaux de criticité Sig que l'estimation de la grandeur G n'est pas robuste, il peut envoyer l'instruction Inst d'arrêter le véhicule Veh ou de mettre en pause la manœuvre Man$_j$ jusqu'à ce qu'une estimation robuste de la grandeur G soit obtenue.

L'instruction Inst peut également correspondre à une prise en compte d'au moins une mesure supplémentaire $y_1$-$y_n$ parmi l'ensemble des mesures disponibles effectuées par au moins un capteur Cap$^1$-Cap$^k$ associée à une incertitude $R_n$ ou $Q_n$ afin d'améliorer la robustesse de l'estimation de la grandeur G de l'état du véhicule Veh.

Les modes de mise en œuvre particuliers du procédé de contrôle de navigation représentés sur les figures 2 et figure 4 sont mis en œuvre sur des systèmes de contrôle de navigation SCN représentés respectivement sur les figures 3 et figure 5.

Sur la figure 3, des capteurs Cap$^k$ prennent des mesures sur le véhicule Veh et son environnement Env. Par exemple, un GPS peut mesurer la position du véhicule Veh, une unité de mesure inertielle peut mesurer la vitesse et la position du véhicule, un radar peut mesurer la position d'objets à proximité du véhicule etc.

Ces mesures et les incertitudes qui leurs sont associées sont utilisées par un module d'estimation M0 pour estimer une grandeur G avec un filtre de Kalman FK.

Un module MDP détermine ensuite les dérivées partielles de la grandeur par rapport aux mesures.

A partir des valeurs de dérivées partielles déterminées par le module MDP, un module MOV obtient une ou plusieurs valeurs de criticité telles que décrit précédemment.

Un module ME envoie ensuite un ou plusieurs signaux de criticité Sig représentatifs de ces valeurs de criticité VC à un module de réception MR.

Ce module MR permet d'afficher le ou les signaux de criticité à un utilisateur qui décide d'une instruction telle que décrite précédemment.

Cette instruction est reçue ce module MR puis appliquée par un module d'application MA.

Si cette instruction indique une commande de contrôle de navigation, elle est appliquée au véhicule Veh. Si elle indique de prendre en compte plus de mesures, une nouvelle estimation de l'état cible est réalisée.

La figure 6 représente un système de navigation SNav intégrant un système de contrôle de navigation SCN et un jeu de capteurs $Cap^1$-$Cap^k$

Dans un mode particulier de réalisation de ce système Nav, ce jeu de capteurs $Cap^1$-$Cap^k$ comporte au moins une unité de mesure inertielle.

La figure 7 représente l'architecture matérielle d'un système de contrôle de navigation SCN conforme à un mode particulier de réalisation de l'invention.

Dans le mode de réalisation décrit ici, le système de contrôle de navigation SCN dispose d'une architecture matérielle d'un ordinateur. Il comprend notamment un processeur D1, une mémoire morte D2, une mémoire vive D3, une mémoire non volatile réinscriptible D4 et des moyens de communication D5.

La mémoire morte D2 du système SCN constitue un support d'enregistrement conforme à l'invention, lisible par le processeur D1 et sur lequel est enregistré un programme d'ordinateur PGI conforme à l'invention, ce programme comportant des instructions pour l'exécution des étapes d'un procédé de contrôle selon l'invention décrit précédemment en référence à la figure 2 ou figure 4 dans deux modes de réalisation.

Le programme d'ordinateur PGI définit des modules fonctionnels des systèmes de contrôle SCN représentés sur la figure 3 ou figure 5.

## Revendications

1. Procédé de contrôle de navigation d'un véhicule (Veh) pour la mise en œuvre d'une manœuvre de navigation ($MAN_j$), le procédé comprenant les étapes :

   - d'estimation (E0) d'une grandeur (G) par un filtre de Kalman (FK) à partir de paramètres ($Par_1$-$Par_n$), d'un modèle numérique du véhicule dans son environnement, et d'au moins une mesure ($y_1$-$y_n$) effectuée par au moins un capteur ($Cap^1$-$Cap^k$) et associée à une incertitude ($R_1$-$R_n$, $Q_1$-$Q_n$) sur cette mesure ($y_1$-$y_n$), ladite grandeur (G) représentant une caractéristique du véhicule ou relative à l'environnement du véhicule et servant à la mise en œuvre de ladite manœuvre de navigation ($MAN_j$) ;
   - de détermination (EDP) d'au moins une valeur de dérivée partielle ($D^Gy_1$-$D^Gy_n$) de ladite grandeur (G) par rapport à ladite au moins une mesure ($y_1$-$y_n$) ;
   - d'obtention (EOV) d'au moins une valeur de criticité (VC) de ladite au moins une mesure ($y_1$-$y_n$) pour ladite estimation (E0), à partir de ladite au moins une valeur de dérivée partielle ($D^Gy_1$-$D^Gy_n$), la valeur de criticité quantifiant une influence de ladite au moins une mesure sur l'estimation de la grandeur ;
   - d'application (EA) d'au moins une instruction (Inst) déterminée à partir d'au moins une information sur une robustesse de l'estimation de la grandeur, ladite information étant contenue dans au moins un signal de criticité (Sig) représentatif de ladite au moins une valeur de criticité (VC) ;

   ladite instruction indiquant une commande de contrôle pour la mise en œuvre de ladite manœuvre de navigation ($MAN_j$), ledit au moins un signal de criticité (Sig) étant généré (EGen) en fonction d'un résultat d'une comparaison (EComp) entre ladite au moins une valeur de criticité (VC) et au moins un seuil (Se), ledit au moins un seuil (Se) étant défini par rapport à ladite manœuvre (MANj).

2. Procédé selon la revendication 1, dans lequel une dite instruction (Inst) indique d'ajouter des mesures pour une estimation ultérieure de ladite grandeur (G).

3. Procédé selon la revendication 1 ou 2, dans lequel :

   - des mesures ($y_1$-$y_n$) effectuées successivement sont obtenues ; et
   - au cours de ladite étape de détermination (EDP), pour chacune de ces mesures, une valeur de dérivée partielle ($D^Gy_1$-$D^Gy_n$) de ladite grandeur est déterminée par rapport à cette mesure.

4. Procédé selon l'une des revendications 1 à 3, dans lequel, pour au moins un instant (n) donné, une dite valeur de dérivée partielle ($D^Gy_n$) est déterminée au cours de ladite étape (EDP) de détermination, par rapport à une mesure ($y_n$), cette mesure comportant au moins deux mesures ($y_n^1$-$y_n^k$) effectuées chacune à cet instant donné (n) par des capteurs ($Cap^1$-$Cap^k$) distincts.

5. Procédé selon l'une des revendications 1 à 4, dans lequel ladite au moins une valeur de criticité (VC) est égale à ladite au moins une valeur de dérivée partielle ($D^Gy_1$-$D^Gy_n$) déterminée au cours de ladite étape (EDP) de détermination.

**6.** Procédé selon l'une des revendications 1 à 4, dans lequel :

- plusieurs valeurs de dérivées partielles ($D^G y_1$-$D^G y_n$) sont déterminées au cours de ladite étape (EDP) de détermination ; et
- ladite au moins une valeur de criticité (VC) est égale à une somme pondérée desdites valeurs de dérivée partielle ($D^G y_1$-$D^G y_n$).

**7.** Procédé selon l'une des revendications 1 à 4, dans lequel :

- plusieurs valeurs de dérivées partielles ($D^G y_1$-$D^G y_n$) sont déterminées au cours de ladite étape (EDP) de détermination ;
- ladite au moins une valeur de criticité (VC) est égale à une somme de produits entre :

(i) une dite valeur de dérivée partielle ($D^G y_1$-$D^G y_n$) par rapport à une dite mesure ($y_1$-$y_n$) ; et
(ii) ladite incertitude ($R_1$-$R_n$, $Q_1$-$Q_n$) sur cette mesure ($y_1$-$y_n$).

**8.** Procédé selon l'une des revendications 1 à 4, dans lequel ladite au moins une valeur de criticité (VC) est égale à un produit entre :

(i) une dite valeur de dérivée partielle ($D^G y_1$-$D^G y_n$) par rapport à une dite mesure ($y_1$-$y_n$) ; et
(ii) ladite incertitude ($R_1$-$R_n$, $Q_1$-$Q_n$) sur cette mesure ($y_1$-$y_n$).

**9.** Système de contrôle de navigation d'un véhicule (Veh) pour la mise en œuvre d'une manœuvre de navigation ($MAN_j$), le système comprenant :

- un module d'estimation (M0) d'une grandeur (G) par un filtre de Kalman (FK) à partir de paramètres ($Par_1$-$Par_n$), d'un modèle numérique du véhicule dans son environnement, et d'au moins une mesure ($y_1$-$y_n$) effectuée par au moins un capteur ($Cap^1$-$Cap^k$) et associée à une incertitude à une incertitude ($R_n$, $Q_n$) sur cette mesure ($y_1$-$y_n$), ladite grandeur (G) représentant une caractéristique du véhicule ou relative à l'environnement du véhicule et servant à la mise en œuvre de ladite manœuvre de navigation ($MAN_j$) ;
- un module de détermination (MDP) d'au moins une valeur de dérivée partielle ($D^G y_1$-$D^G y_n$) de ladite grandeur (G) par rapport à ladite au moins une mesure ($y_1$-$y_n$) ;
- un module d'obtention (MOV) d'au moins une valeur de criticité (VC) de ladite au moins une mesure ($y_1$-$y_n$) pour ladite estimation (E0), à partir de ladite au moins une valeur de dérivée partielle ($D^G y_1$-$D^G y_n$), la valeur de criticité quantifiant une influence de ladite au moins une mesure sur l'estimation de la grandeur ;
- un module d'application (MA) d'au moins une instruction (Inst) déterminée à partir d'au moins une information sur une robustesse de l'estimation de la grandeur, ladite information étant contenue dans au moins un signal de criticité (Sig) représentatif de ladite au moins une valeur de criticité (VC) ;

ladite instruction indiquant une commande de contrôle pour la mise en œuvre de ladite manœuvre de navigation ($MAN_j$), ledit module d'envoi (ME) comportant des sous-modules :

- de comparaison (MComp) entre ladite au moins une valeur de criticité (VC) et au moins un seuil (Se), ledit au moins un seuil (Se) étant défini par rapport à ladite manœuvre (MANj) ;
- de génération (MGen) dudit au moins un signal de criticité (Sig) en fonction d'un résultat de la comparaison par ledit sous-module de comparaison (MComp).

**10.** Système de navigation (SNav) d'un véhicule (Veh), ledit système de navigation (SNav) étant adapté pour réaliser les fonctions du système de contrôle (SCN) selon la revendication 9 et comprenant au moins un capteur ($Cap^1$-$Cap^k$) destiné à obtenir au moins une mesure ($y_1$-$y_n$) servant à l'estimation de ladite grandeur (G) servant à la mise en œuvre d'une manœuvre de navigation ($MAN_j$).

**11.** Système (SNav) de navigation selon la revendication 10, dans lequel au moins un dit capteur ($Cap^1$-$Cap^k$) est une unité de mesure inertielle.

**12.** Programme informatique (PGI) comportant des instructions pour l'exécution des étapes d'un procédé selon au moins une des revendications 1 à 8.

**13.** Support d'enregistrement (D2), lisible par un équipement informatique d'un programme informatique (PGI) comportant des instructions pour l'exécution des étapes d'un procédé selon au moins une des revendications 1 à 8. 1

**Patentansprüche**

**1.** Verfahren zur Steuerung der Navigation eines Fahrzeugs (Veh) für die Umsetzung eines Navigationsmanövers ($MAN_j$), wobei das Verfahren die Schritte zur:

- Schätzung (E0) einer Größe (G) durch ein Kalman-Filter (FK) ausgehend von Parametern ($Par_1$-$Par_n$), einem numerischen Modell des Fahrzeugs in seiner Umgebung, und zumindest einer Messung ($y_1$-$y_n$), die durch zumindest einen Sensor ($Cap^1$-$Cap^k$) erfolgt ist und einer Unsicherheit ($R_1$-$R_n$, $Q_1$-$Q_n$) bezüglich dieser Messung ($y_1$-$y_n$) zugeordnet ist, wobei die Größe (G) eine Eigenschaft des Fahrzeugs oder in Bezug auf die Umgebung des Fahrzeugs darstellt und zur Umsetzung des Navigationsmanövers ($MAN_j$) dient,
- Bestimmung (EDP) zumindest eines partiellen Ableitungswerts ($D^G y_1$-$D^G y_n$) der Größe (G) in Bezug auf die zumindest eine Messung ($y_1$-$y_n$),
- Ermittlung (EOV) zumindest eines Kritikalitätswerts (VC) der zumindest einen Messung ($y_1$-$y_n$) für die Schätzung (E0), ausgehend von dem zumindest einen partiellen Ableitungswert ($D^G y_1$-$D^G y_n$), wobei der Kritikalitätswert einen Einfluss der zumindest einen Messung auf die Schätzung der Größe quantifiziert,
- Anwendung (EA) zumindest einer Anweisung (Inst), die ausgehend von zumindest einer Information über die Robustheit der Schätzung der Größe bestimmt wird, wobei die Information in zumindest einem Kritikalitätssignal (Sig) enthalten ist, das den zumindest einen Kritikalitätswert (VC) darstellt,

wobei die Anweisung einen Steuerbefehl für die Umsetzung des Navigationsmanövers ($MAN_j$) angibt , wobei das zumindest eine Kritikalitätssignal (Sig) als Funktion eines Resultats eines Vergleichs (EComp) zwischen dem zumindest einen Kritikalitätswert (VC) und zumindest einer Schwelle (Se) erzeugt wird (EGen), wobei die zumindest eine Schwelle (Se) in Bezug auf das Manöver ($MAN_j$) definiert ist, umfasst.

**2.** Verfahren nach Anspruch 1, wobei eine solche Anweisung angibt, dass Messungen für eine weitere Schätzung der Größe (G) hinzugefügt werden.

**3.** Verfahren nach Anspruch 1 oder 2, wobei:

- der Reihe nach ausgeführte Messungen ($y_1$-$y_n$) erhalten werden, und
- im Verlauf des Schritts der Bestimmung (EDP) für jede dieser Messungen ein partieller Ableitungswert ($D^G y_1$-$D^G y_n$) der Größe in Bezug auf diese Messung bestimmt wird.

**4.** Verfahren nach einem der Ansprüche 1 bis 3, wobei für zumindest einen gegebenen Zeitpunkt (n) ein solcher partieller Ableitungswert ($D^G y_n$) im Verlauf des Schritts (EDP) der Bestimmung in Bezug auf eine Messung ($y_n$) bestimmt wird, wobei diese Messung zumindest zwei Messungen ($y_n^1$-$y_n^k$) beinhaltet, die jeweils zu diesem gegebenen Zeitpunkt (n) durch unterschiedliche Sensoren ($Cap^1$-$Cap^k$) erfolgen.

**5.** Verfahren nach einem der Ansprüche 1 bis 4, wobei der zumindest eine Kritikalitätswert (VC) gleich dem zumindest einen partiellen Ableitungswert ($D^G y_1$-$D^G y_n$) ist, der im Verlauf des Schritts (EDP) der Bestimmung bestimmt wird.

**6.** Verfahren nach einem der Ansprüche 1 bis 4, wobei:

- mehrere partielle Ableitungswerte ($D^G y_1$-$D^G y_n$) im Verlauf des Schritts (EDP) der Bestimmung bestimmt werden, und
- der zumindest eine Kritikalitätswert (VC) gleich einer gewichteten Summe der partiellen Ableitungswerte ($D^G y_1$-$D^G y_n$) ist.

**7.** Verfahren nach einem der Ansprüche 1 bis 4, wobei:

- mehrere partielle Ableitungswerte ($D^G y_1$-$D^G y_n$) im Verlauf des Schritts (EDP) der Bestimmung bestimmt werden,
- der zumindest eine Kritikalitätswert (VC) gleich einer Summe von Produkten aus:

(i) einem solchen partiellen Ableitungswert ($D^G y_1$-$D^G y_n$) in Bezug auf eine solche Messung ($y_1$-$y_n$), und
(ii) der Unsicherheit ($R_1$-$R_n$, $Q_1$-$Q_n$) bezüglich dieser Messung ($y_1$-$y_n$) ist.

8. Verfahren nach einem der Ansprüche 1 bis 4, wobei der zumindest eine Kritikalitätswert (VC) gleich einem Produkt aus:

   (i) einem solchen partiellen Ableitungswert ($D^G y_1$-$D^G y_n$) in Bezug auf eine solche Messung ($y_1$-$y_n$), und
   (ii) der Unsicherheit ($R_1$-$R_n$, $Q_1$-$Q_n$) bezüglich dieser Messung ($y_1$-$y_n$) ist.

9. System zur Steuerung der Navigation eines Fahrzeugs (Veh) für die Umsetzung eines Navigationsmanövers ($MAN_j$), wobei das System umfasst:

   - ein Modul (M0) zur Schätzung einer Größe (G) durch ein Kalman-Filter (FK) ausgehend von Parametern ($Par_1$-$Par_n$), einem numerischen Modell des Fahrzeugs in seiner Umgebung, und zumindest einer Messung ($y_1$-$y_n$), die durch zumindest einen Sensor ($Cap^1$-$Cap^k$) erfolgt ist und einer Unsicherheit ($R_n$, $Q_n$) bezüglich dieser Messung ($y_1$-$y_n$) zugeordnet ist, wobei die Größe (G) eine Eigenschaft des Fahrzeugs oder in Bezug auf die Umgebung des Fahrzeugs darstellt und zur Umsetzung des Navigationsmanövers ($MAN_j$) dient,
   - ein Modul zur Bestimmung (MDP) zumindest eines partiellen Ableitungswerts ($D^G y_1$-$D^G y_n$) der Größe (G) in Bezug auf die zumindest eine Messung ($y_1$-$y_n$),
   - ein Modul zum Ermittlung (MOV) zumindest eines Kritikalitätswerts (VC) der zumindest einen Messung ($y_1$-$y_n$) für die Schätzung (E0), ausgehend von dem zumindest einen partiellen Ableitungswert ($D^G y_1$-$D^G y_n$), wobei der Kritikalitätswert einen Einfluss der zumindest einen Messung auf die Schätzung der Größe quantifiziert,
   - ein Modul zur Anwendung (MA) zumindest einer Anweisung (Inst), die ausgehend von zumindest einer Information über die Robustheit der Schätzung der Größe bestimmt wird, wobei die Information in zumindest einem Kritikalitätssignal (Sig) enthalten ist, das den zumindest einen Kritikalitätswert (VC) darstellt,

   wobei die Anweisung einen Steuerbefehl für die Umsetzung des Navigationsmanövers ($MAN_j$) angibt, wobei das Übertragungsmodul (ME) folgende Submodule beinhaltet:

   - zum Vergleich (MComp) zwischen dem zumindest einen Kritikalitätswert (VC) und zumindest einer Schwelle (Se), wobei die zumindest eine Schwelle (Se) in Bezug auf das Manöver ($MAN_j$) definiert ist,
   - zur Erzeugung (MGen) des zumindest einen Kritikalitätssignals (Sig) als Funktion eines Resultats des Vergleichs durch das Submodul zum Vergleich (MComp).

10. Navigationssystem (SNav) für ein Fahrzeug (Veh), wobei das Navigationssystem (SNav) dazu geeignet ist, die Funktionen des Steuersystems (SCN) nach Anspruch 9 zu verwirklichen und zumindest einen Sensor ($Cap^1$-$Cap^k$) umfasst, der dazu bestimmt ist, zumindest eine Messung ($y_1$-$y_n$) zu erhalten, die zur Schätzung der Größe (G) dient, die zur Umsetzung eines Navigationsmanövers ($MAN_j$) dient.

11. Navigationssystem (SNav) nach Anspruch 10, wobei zumindest ein solcher Sensor ($Cap^1$-$Cap^k$) eine Einheit zur Trägheitsmessung ist.

12. Computerprogramm (PGI), das Anweisungen für die Ausführung von Schritten eines Verfahrens nach zumindest einem der Ansprüche 1 bis 8 beinhaltet.

13. Computerlesbares Speichermedium (D2) für ein Computerprogramm (PGI), das Anweisungen für die Ausführung der Schritte eines Verfahrens nach zumindest einem der Ansprüche 1 bis 8 beinhaltet.

**Claims**

1. A method for controlling the navigation of a vehicle (Veh) in order to implement a navigation manoeuvre ($MAN_j$), the method comprising the steps:

   - estimating (E0) a quantity (G) by means of a Kalman filter (FK) on the basis of parameters ($Par_1$-$Par_n$), a numerical model of the vehicle in its surroundings and at least one measurement ($y_1$-$y_n$) carried out by at least one sensor ($Cap^1$-$Cap^k$) and associated with an uncertainty ($R_1$-$R_n$, $Q_1$-$Q_n$) regarding said measurement ($y_1$-$y_n$), said quantity (G) representing a characteristic of the vehicle or relative to the surroundings of the vehicle and being used to implement said navigation manoeuvre ($MAN_j$);

- determining (EDP) at least one partial derivative value ($D^G y_1$-$D^G y_n$) of said quantity (G) with respect to said at least one measurement ($y_1$-$y_n$);

- obtaining (EOV) at least one criticality value (VC) of said at least one measurement ($y_1$-$y_n$) for said estimation (E0) on the basis of said at least one partial derivative value ($D^G y_1$-$D^G y_n$), the criticality value quantifying an influence of said at least one measurement on the estimation of the quantity;

- applying (EA) at least one instruction (Inst) determined on the basis of at least one piece of information relating to the robustness of the estimation of the quantity, said piece of information being contained in at least one criticality signal (Sig) representative of said at least one criticality value (VC);

said instruction indicating a control command for implementing said navigation manoeuvre ($MAN_j$), said at least one criticality signal (Sig) being generated (EGen) as a function of a result of a comparison (EComp) between said at least one criticality value (VC) and at least one threshold (Se), said at least one threshold (Se) being defined with respect to said manoeuvre ($MAN_j$).

2. The method according to claim 1, wherein one said instruction (Inst) indicates adding measurements for a subsequent estimation of said quantity (G).

3. The method according to claim 1 or 2, wherein:

- successive measurements ($y_1$-$y_n$) are obtained; and
- during said determination step (EDP), for each of these measurements, a partial derivative value ($D^G y_1$-$D^G y_n$) of said quantity is determined with respect to this measurement.

4. The method according to one of claims 1 to 3, wherein, for at least one given instant (n), one said partial derivative value ($D^G y_n$) is determined during said determination step (EDP), with respect to a measurement ($y_n$), this measurement comprising at least two measurements ($y_n^1$-$y_n^k$) each carried out at this given instant (n) by distinct sensors ($Cap^1$-$Cap^k$).

5. The method according to one of claims 1 to 4, wherein said at least one criticality value (VC) is equal to said at least one partial derivative value ($D^G y_1$-$D^G y_n$) determined during said determination step (EDP).

6. The method according to one of claims 1 to 4, wherein:

- a plurality of partial derivative values ($D^G y_1$-$D^G y_n$) are determined during said determination step (EDP); and
- said at least one criticality value (VC) is equal to a weighted sum of said partial derivative values ($D^G y_1$-$D^G y_n$).

7. The method according to one of claims 1 to 4, wherein:

- a plurality of partial derivative values ($D^G y_1$-$D^G y_n$) are determined during said determination step (EDP);
- said at least one criticality value (CV) is equal to a sum of products between:

(i) one of said partial derivative value ($D^G y_1$-$D^G y_n$) with respect to one of said measurements ($y_1$-$y_n$); and
(ii) said uncertainty ($R_1$-$R_n$, $Q_1$-$Q_n$) on this measurement ($y_1$-$y_n$).

8. The method according to one of claims 1 to 4, wherein said at least one criticality value (CV) is equal to a product of:

(i) one of said partial derivative values ($D^G y_1$-$D^G y_n$) with respect to one of said measurements ($y_1$-$y_n$); and
(ii) said uncertainty ($R_1$-$R_n$, $Q_1$-$Q_n$) on this measurement ($y_1$-$y_n$).

9. A navigation control system of a vehicle (Veh), for implementing a navigation manoeuvre ($MAN_j$), the system comprising:

- a module (M0) for estimating a quantity (G) by means of a Kalman filter (FK) on the basis of parameters ($Par_1$-$Par_n$), a numerical model of the vehicle in its surroundings and at least one measurement ($y_1$-$y_n$) carried out by at least one sensor ($Cap^1$-$Cap^k$) and associated with an uncertainty ($R_n$, $Q_n$) regarding said measurement ($y_1$-$y_n$), said quantity (G) representing a characteristic of the vehicle or relative to the surroundings of the vehicle and being used to implement said navigation manoeuvre ($MAN_j$);

- a module (MDP) for determining at least one partial derivative value ($D^G y_1$-$D^G y_n$) of said quantity (G) with respect to said at least one measurement ($y_1$-$y_n$);
- a module (MOV) for obtaining at least one criticality value (VC) of said at least one measurement ($y_1$-$y_n$) for said estimation (E0) on the basis of said at least one partial derivative value ($D^G y_1$-$D^G y_n$), the criticality value quantifying an influence of said at least one measurement on the estimation of the quantity;
- a module (MA) for applying at least one instruction (Inst) determined on the basis of at least one piece of information about the robustness of the estimation of the quantity, said piece of information being contained in at least one criticality signal (Siq) representative of said at least one criticality value (VC);

said instruction indicating a control command for implementing said navigation manoeuvre ($MAN_j$), said transmission module (ME) comprising sub-modules:

- (MComp) for comparing said at least one criticality value (VC) and at least one threshold (Se), said at least one threshold (Se) being defined with respect to said manoeuvre ($MAN_j$);
- (MGen) for generating said at least one criticality signal (Sig) as a function of a result of the comparison by said comparison sub-module (MComp).

10. A navigation system (SNav) for a vehicle (Veh), said navigation system (SNav) being suitable for performing the functions of the control system (SCN) according to claim 9 and comprising at least one sensor ($Cap^1$-$Cap^k$) intended to obtain at least one measurement ($y_1$-$y_n$) being used to estimate said quantity (G) being used to implement a navigation manoeuvre ($MAN_j$).

11. The navigation system (SNav) according to claim 10, wherein at least one said sensor ($Cap^1$-$Cap^k$) is an inertial measurement unit.

12. A computer program (PGI) comprising instructions for executing the steps of a method according to at least one of claims 1 to 8.

13. A recording medium (D2), readable by computer equipment, for a computer program (PGI) comprising instructions for executing the steps of a method according to at least one of claims 1 to 8.

[Fig.1]

[Fig.2]

$$ECap \longrightarrow \boxed{y_n, R_n}$$

$$E0 \longrightarrow \boxed{FK \rightarrow G}$$

$$EDP \longrightarrow \boxed{D^G y_n}$$

$$EOV \longrightarrow \boxed{VC}$$

$$EE \longrightarrow \boxed{Sig}$$

$$ER \longrightarrow \boxed{Inst}$$

$$EM \longrightarrow \boxed{Appli}$$

[Fig.3]

[Fig.4]

```
ECap ———  [ yₙ, Rₙ ]

E0 ———  [ FK → G ]

EDP ———  [ Dᴳyₙ ]

EOV ———  [ VC ]

        ┌─────────────────────┐
EComp ——│   [ VC - Se ]       │
     EE │                     │
EGen ———│   [ Sig ]           │
        └─────────────────────┘

ER ———  [ Inst ]

EM ———  [ Appli ]
```

[Fig.5]

[Fig.6]

[Fig.7]

[Fig.8]

**EP 4 487 079 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Land-Vehicle Navigation Using GPS. **ERIC AB-BOTT et al.** PROCEEDINGS OF THE IEEE. IEEE., 01 January 1999, vol. 87

- Local and global sensitivity analysis of a tractor and single axle grain cart dynamic system model. **KARKEE M et al.** BIOSYSTEMS ENGINEERING. ELSEVIER, 01 August 2010, vol. 106